# FASCICULE DE BREVET EUROPEEN

(11) **EP 3 582 980 B1**
(45) Date de publication et mention de la délivrance du brevet: **04.08.2021**
(21) Numéro de dépôt: 18707113.9
(22) Date de dépôt: 15.02.2018
(51) Int. Cl.: B60C 23/04, B29D 30/00

(54) **DISPOSITIF DE FIXATION A UNE ENVELOPPE PNEUMATIQUE D'UN ORGANE ÉLECTRONIQUE**
VORRICHTUNG ZUR BEFESTIGUNG EINES ELEKTRONISCHEN ELEMENTS AN EINEN LUFTREIFEN
DEVICE FOR ATTACHING AN ELECTRONIC MEMBER TO A PNEUMATIC TYRE

(30) Priorité: 17.02.2017 FR 1770154
(43) Date de publication de la demande: 25.12.2019
(73) Titulaire: Compagnie Générale des Etablissements Michelin, 63000 Clermont-Ferrand (FR)
(72) Inventeur: BARJON, Stéphane, 63040 Clermont-Ferrand Cedex 9 (FR); PALHEIRE, Yann, 63040 Clermont-Ferrand Cedex 9 (FR)
(74) Mandataire: Roussy, Delphine
(86) Numéro de dépôt international: PCT/FR2018/050364
(87) Numéro de publication internationale: WO 2018/150141

(56) Documents cités:
- EP-A1- 1 598 218
- DE-A1-102014 206 463
- US-A1- 2009 101 257

## Description

### Domaine de l'invention

La présente invention concerne un dispositif de fixation sur une enveloppe pneumatique d'un organe électronique concernant des mesures de paramètres de l'enveloppe pneumatique.

### Arrière-plan technologique

Le développement d'organes électroniques intégrés à des ensembles montés, comprenant une enveloppe pneumatique et une roue, s'est accru ces dernières années. En effet ces organes électroniques mesurent des paramètres de l'ensemble monté comme la température ou la pression de gonflage à l'intérieur de la cavité formée par l'enveloppe pneumatique et la jante de roue dans un état monté, gonflé. Ces paramètres sont essentiels à un usage sécuritaire de l'ensemble monté. Désormais, les fonctionnalités offertes par ces organes électroniques augmentent en multipliant le nombre de paramètres pris en compte. La communication avec ces organes électroniques notamment pour la communication des paramètres de l'ensemble monté se fait généralement par le biais d'une transmission radiofréquence vers des dispositifs émetteurs/récepteurs.

Ces nouvelles fonctionnalités permettent le développement de nouveaux services à destination des clients finaux. La qualité des services offerts dépend en grande partie de la qualité des paramètres mesurés et transmis. Naturellement la qualité de la mesure effectuée est fortement liée aux composants structurels et fonctionnels de l'organe électronique. De ce fait, il est essentiel de prendre en compte l'inviolabilité de cet organe électronique pour assurer la qualité des services offerts avec ceux-ci.

Cet organe électronique peut être suffisamment petit pour être intégré dans la structure même d'une enveloppe pneumatique comme par exemple les transpondeurs passifs RFID (acronyme en anglais de *Radio Frequency IDentification).* Mais, dans la majorité des cas, ces organes électroniques sont actifs et sont rapportés aux composants de l'ensemble monté par l'intermédiaire d'un dispositif de fixation. De ce fait, l'inviolabilité de l'organe électronique est alors assurée en premier lieu par l'inviolabilité du dispositif de fixation de l'organe électronique en particulier sur l'enveloppe pneumatique. Bien entendu le dispositif de fixation doit aussi satisfaire à bien d'autres contraintes tels que l'endurance thermomécanique en condition d'usage, l'endurance de l'enveloppe pneumatique, la performance de communication radiofréquence etc...

Le document WO201398711A1 décrit un dispositif de fixation de l'organe électronique permettant de retenir de façon irréversible l'organe électronique sur l'enveloppe pneumatique sans qu'il soit possible de le substituer ou de le modifier. Cependant, la durée de vie des organes électroniques, de type actif par exemple, est limitée en raison, par exemple, de la capacité d'énergie dont ils sont pourvus. Ainsi, la maintenance de l'organe électronique pour changer sa batterie ou bénéficier d'une nouvelle évolution du système électronique n'est possible qu'en détruisant tout d'abord soit la liaison physique entre le dispositif de fixation et l'enveloppe pneumatique soit en détériorant le dispositif de fixation pour extraire l'organe électronique initial. Le changement d'organe électronique nécessite alors une seconde étape pour fixer un nouveau dispositif de fixation avec le nouvel organe électronique inséré à l'intérieur du nouveau dispositif de fixation. La première étape pouvant endommager la structure du pneumatique doit nécessiter l'intervention d'un personnel qualifié pour être réalisée. Ce processus est lourd et nécessite un temps d'immobilisation de l'enveloppe pneumatique qui est néfaste au regard du taux d'utilisation de l'enveloppe pneumatique. Le document US2009101257A1 décrit un dispositif de fixation à un pneumatique d'un organe électronique dans le but de simplifier l'intégration de l'organe électronique au niveau du pneumatique. Le dispositif est ainsi constitué de deux demi-sphères disjointes liées entre elles par un dispositif de serrage réutilisable. Le document DE102014206463A1 divulgue un dispositif de fixation d'un organe électronique dans le but de permettre à la fois une intégration et une extraction facile de l'organe électronique dans le pneumatique. Dans ce but, le dispositif de fixation comprend un élément amovible sous effort mécanique détruisant le dispositif de fixation permettant l'extraction de l'organe électronique du dispositif de fixation. Cependant, il est alors nécessaire de fixer un nouveau dispositif de fixation dans le pneumatique si le pneumatique doit encore être utilisé. Enfin, le document EP1598218A1 divulgue un dispositif de fixation à un pneumatique d'un organe électronique dans le but de protéger des sollicitations thermiques l'organe électronique dans un environnement de véhicule automobile. A cet effet, l'organe électronique est lié rigidement à un écran thermique et un support rigide par l'intermédiaire d'un collier de fixation traversant les deux composants, le tout est fixé au pneumatique. Le collier de fixation peut être coupé pour libérer l'organe électronique mais l'insertion d'un nouvel organe électronique nécessite l'emploi d'un autre système de fixation.

L'un des objets de l'invention qui va suivre a pour objectif de résoudre les problèmes de maintenance des organes électroniques tout en préservant l'inviolabilité du dispositif de fixation et en gardant un compromis avec les autres fonctionnalités du dispositif de fixation telle que, par exemple, l'endurance thermomécanique du dispositif de fixation, l'endurance de l'enveloppe pneumatique et l'efficacité de la communication radiofréquence de l'organe électronique.

Afin de mieux comprendre l'invention, on entend ici par les directions circonférentielle S, axiale A et radiale R, des directions définies par rapport au repère tournant de l'enveloppe pneumatique autour de son axe de rotation naturel. La direction radiale R est la direction s'éloignant perpendiculairement de l'axe de rotation naturel. La direction axiale A est la direction parallèle à l'axe de rotation naturelle. Enfin la direction circonférentielle S forme un trièdre direct avec les directions radiale et axiale prédéfinies.

### Description de l'invention

L'invention porte sur un dispositif de fixation à une paroi d'une enveloppe pneumatique d'un organe électronique, tel que défini à la revendication 1.

Tout d'abord, la paroi de maintien présente une ouverture par laquelle on extrait ou insère l'organe électronique tout en maintenant le dispositif de fixation fixé sur la paroi de l'enveloppe pneumatique. Cette opération de manutention de l'organe électronique est possible en raison de la déformation élastique de la paroi de maintien. Ainsi il est possible d'effectuer le changement de l'organe électronique en raison de l'accessibilité et la taille de l'ouverture. L'inviolabilité du dispositif de fixation ainsi fixé à la paroi de l'enveloppe pneumatique est assurée d'une part par le système de serrage à usage unique de la paroi de maintien et d'autre part par le dispositif de retenue de ce système de serrage présent sur la paroi de maintien. En effet, on entend ici par le terme « système de serrage à usage unique » que l'enlèvement du système de serrage n'est possible qu'avec une destruction au moins partielle de celui-ci. En effet, celui-ci est maintenu en place sur le dispositif de fixation par l'intermédiaire du dispositif de retenue présent sur la paroi de maintien. La seule possibilité d'enlèvement du système de serrage sans détérioration des divers éléments du dispositif de fixation consiste à rompre le système de serrage. Cette opération est par exemple possible au niveau du dispositif de retenue qui présente une séparation au niveau de l'ouverture de la paroi de maintien. Mais tout autre moyen comme une cavité creuse de la paroi de maintien dont la dimension est supérieure au système de serrage, localisée au droit du système de serrage peut assurer cette fonction. Ainsi toute action d'extraction ou d'insertion d'un organe électronique dans le dispositif de fixation nécessite tout d'abord la destruction du système de serrage à usage unique. De surcroit, pour limiter le risque d'éjection intempestive de l'organe électronique du dispositif de fixation il est nécessaire de mettre en place un nouveau système de serrage à usage unique en lieu et place de l'ancien. En effet, la présence du système de serrage à usage unique dans le dispositif de retenue empêche le débattement maximum des parties séparées de la paroi de maintien ce qui minimise l'espace offert par rapport aux phases d'extraction ou d'insertion de l'organe électronique où le système de serrage à usage unique est absent.

Selon un mode de réalisation préférentiel, l'ouverture définissant une lèvre sur chaque structure disjointe de la paroi de maintien, le système de serrage est apte à rapprocher les lèvres de l'ouverture au niveau du dispositif de retenue.

Afin de bloquer toute extraction de l'organe électronique de la paroi de maintien, le système de serrage assure un écartement des structures disjointes de la paroi de maintien au niveau du dispositif de retenue. Le dispositif de retenue dans cette configuration est traversé par l'ouverture. De ce fait, l'ouverture autorise le dépliement des structures disjointes de la paroi de maintien situées au-dessus du dispositif de retenue par rapport à la direction normale à la semelle. Ce dépliement correspond à un dépliement partiel des structures disjointes.

Selon un mode de réalisation particulier, la paroi de maintien comprend N orifices traversants, N étant supérieur ou égal à 2.

Ces orifices traversant la paroi de maintien ont un premier rôle de mettre en communication le volume de la cavité interne de l'ensemble monté délimitée par la roue et l'enveloppe pneumatique avec le volume intérieure du dispositif de fixation. Ainsi, les grandeurs physiques telles que la pression et la température sont uniformes entre la cavité interne de l'ensemble monté et la cavité du dispositif de fixation. Par conséquent, les capteurs de l'organe électronique situé dans la cavité du dispositif de fixation mesurant de telles grandeurs donnent une information fiable des grandeurs de l'ensemble monté.

De plus, ces orifices traversants peuvent servir aussi de points d'arrêt à l'ouverture de la paroi de maintien. En effet, si l'ouverture de la paroi de maintien se termine dans un orifice, on disperse les contraintes mécaniques sur la totalité du contour de l'orifice. Ceci réduit les phénomènes de surcontraintes propices à l'initiation et la propagation des fissures dans les matériaux à l'état solide.

Selon un mode de réalisation très particulier, les orifices traversants ont une section à courbure continue.

La continuité de la courbure de ces orifices favorise l'uniformité des contraintes mécaniques sur le contour de l'orifice permettant de limiter les concentrations de contraintes trop fortes. De ce fait, on limite le risque d'initiation et de propagation d'une fissure au niveau de la paroi de maintien.

Selon un mode de réalisation très particulier, tout point de la section des orifices traversants a un rayon de courbure supérieur ou égal à 1 millimètre.

L'orifice est alors de taille conséquente pour être un point d'arrêt efficace de l'ouverture et de ce fait de la déchirure de la paroi de maintien. Dans ce premier cas où la largeur de l'ouverture est inférieure à la dimension de l'orifice par exemple de 1 millimètre. L'ouverture débouche dans l'orifice de taille supérieure ce qui réduit les contraintes mécaniques en les uniformisant sur une surface plus grande. Dans le second cas où l'ouverture a une largeur plus grande que la dimension principale de l'orifice, l'extrémité de l'ouverture potentiellement ponctuelle avant qu'elle débouche dans l'orifice devient surfacique à courbure continue réduisant ainsi les contraintes mécaniques. Cependant dans ce second cas, la réduction des contraintes mécaniques n'est pas aussi forte que dans le premier cas.

Avantageusement, le dispositif de retenue du système de serrage à usage unique de la paroi de maintien comprend un élément compris dans le groupe comprenant nervure, gorge.

Le dispositif de retenue permet d'accueillir en toute sécurité le système de serrage à usage unique. Dans le cas d'une nervure, le positionnement du système de serrage à usage unique est effectuée verticalement inférieurement à la nervure ce qui rend impossible l'enlèvement naturelle du système de serrage à usage unique. Dans le cas d'une gorge, la mise en place du système de serrage à usage unique dans la gorge empêche l'enlèvement naturel de celui-ci.

Selon un mode de réalisation préférentielle, le dispositif de retenue du système de serrage de la paroi de maintien à usage unique est partiellement continu.

Il n'est pas nécessaire, même si c'est recommandé, que le dispositif de retenue soit continu pour assurer sa fonction de maintien en place du système de serrage à usage unique tout en limitant les contraintes mécaniques générées par les efforts de contact. Par exemple, il suffit qu'il soit continu par morceaux pour assurer sa fonction.

Selon un mode de réalisation très préférentiel, le volume d'accueil de l'organe électronique positionné dans le dispositif de fixation étant inscrit dans un cylindre droit autour d'un axe, appelé axe de référence, de hauteur 2H par rapport à la surface intérieure de la semelle et de diamètre 2R, le dispositif de retenue du système de serrage à usage unique de la paroi de maintien s'étend circonférentiellement sur un secteur angulaire d'au moins 90 degrés autour de l'axe de référence, préférentiellement sur un secteur angulaire de 180 degrés.

En s'assurant qu'au moins un quart de la périphérie du système de serrage à usage unique soit ancrée au sein du dispositif de retenue suffit à assurer la fonctionnalité de maintien de ce dernier sur le dispositif de fixation. Afin de limiter les contraintes mécaniques trop fortes, il est préférable que la zone de contact s'étale sur la demi-périphérie. Idéalement, une répartition homogène du dispositif de retenue sur la périphérie complète du dispositif de fixation serait préférable.

Selon un mode de réalisation préférentiel, le volume d'accueil de l'organe électronique positionné dans le dispositif de fixation étant inscrit dans un cylindre droit autour d'un axe, appelé axe de référence, de hauteur 2H par rapport à la surface intérieure de la semelle et de diamètre 2R, le dispositif de retenue du système de serrage à usage unique de la paroi de maintien est situé à une distance radiale supérieure ou égale à R par rapport à l'axe de référence et à une distance verticale supérieure ou égale à H par rapport à la surface intérieure de la semelle.

On assure dans cette configuration que le dispositif de retenue se situe sur la partie supérieure de l'organe électronique permettant d'exercer une action efficace de maintien de l'organe électronique par le serrage de la paroi de maintien sur cet organe. De ce fait, le risque d'éjection intempestive de l'organe électronique du dispositif de fixation au travers de l'ouverture de la paroi de maintien se trouve limité.

Dans un mode de réalisation préférentiel, le dispositif de retenue du système de serrage à usage unique de la paroi de maintien comprend une cavité apte à recevoir au moins une partie du système de serrage de la paroi de maintien à usage unique.

Ainsi, le dispositif de retenue comprend un logement spécifique pour accueillir le système de serrage à usage unique. De plus cette cavité représente une charnière naturelle, en l'absence du système de serrage à usage unique, pour agrandir l'espace de l'ouverture lors des opérations d'insertion et d'extraction de l'organe électronique. Enfin, la présence du système de serrage dans cette cavité réduit alors le débattement naturel des éléments de la paroi de maintien séparée par l'ouverture. De ce fait, le risque d'éjection intempestive de l'organe électronique au travers de l'ouverture s'en trouve réduit. Préférentiellement, la cavité du dispositif de retenue a une section à courbure continue afin de minimiser les concentrations de contraintes dans la but d'améliorer la durée de vie du dispositif de fixation.

Selon un mode de réalisation très préférentiel, la cavité du dispositif de retenue du système de serrage de la paroi de maintien a une section accueillant au moins 40% de la section du système de serrage à usage unique.

Une partie du système de serrage à usage unique occupe parfaitement le volume offert par le dispositif de retenue. D'une part, ceci empêche l'enlèvement mécanique du système de serrage à usage unique sans détérioration des éléments environnants. Et d'autre part, ceci réduit fortement la fonctionnalité de la charnière mécanique que procure la cavité limitant ainsi le risque que l'organe électronique soit éjecté hors du dispositif de fixation tout en augmentant le dépliement des structures disjointes de la paroi de maintien en l'absence du système de serrage à usage unique dans la cavité.

Selon un mode de réalisation très préférentiel, le système de serrage à usage unique de la paroi de maintien comprend un anneau rétractable.

Le système de serrage est à usage unique puisque l'anneau est fermé par nature, son enlèvement nécessite la rupture de l'anneau en au moins un point. De plus, le caractère rétractable du système de serrage empêche l'enlèvement de celui-ci lorsqu'il est en place. Préférentiellement la section de l'anneau est à courbure continue, permettant de limiter les discontinuités qui introduisent des concentrations de contraintes aussi bien dans le système de serrage que les pièces en contact tendant à réduire la durée de vie de l'anneau et de la paroi de maintien.

Selon un mode de réalisation très préférentiel la semelle du dispositif de fixation comprend au moins un marqueur situé sur la partie verticalement supérieure de la semelle.

La présence de ce marqueur permet d'orienter le dispositif de fixation correctement par rapport à la paroi de l'enveloppe pneumatique au cas où les fonctionnalités de l'organe électronique le nécessite comme par exemple, les diverses composantes de l'accélération dans des directions privilégiées de l'enveloppe pneumatique.

Ces marqueurs qui sont des détails géométriques visibles sont compris dans le groupe comprenant ergot, échancrure, bossage, creux. Ces marqueurs sont facilement identifiables à l'aide d'une caméra optique en vue de dessus, la face visiblement accessible du dispositif de fixation, permettant une automatisation de l'opération de pose du dispositif de fixation sur la paroi de l'enveloppe pneumatique.

Avantageusement, le dispositif de fixation est constitué avec un matériau élastomère.

Les propriétés hyper-élastiques des matériaux élastomères favorisent la déformation élastique du dispositif de fixation permettant l'insertion et l'extraction de l'organe électronique du dispositif de fixation. De plus, la paroi de l'enveloppe pneumatique n'étant pas généralement plane, l'élasticité de ces matériaux permet de créer une surface de liaison efficace entre la semelle et la paroi de l'enveloppe pneumatique.

Parmi les matériaux élastomères, les mélanges caoutchouteux à base d'élastomères diéniques saturés ou insaturés tels du butyle, du SBR, du polybutadiène, du caoutchouc naturel, du polyisoprène sont de bons candidats en raison de leur compatibilité avec les mélanges caoutchouteux de l'enveloppe pneumatique. Ces mélanges caoutchouteux ne nuisent pas à la performance de communication radiofréquence des organes électroniques du fait qu'ils sont des isolants électriques naturels dont leur propriété isolante peut être ajustée par l'emploi plus ou moins réduit de charges conductrices.

L'avantage du butyle est de procurer une excellente résistance à l'oxydation. On peut aussi utiliser comme élastomère un EPDM (acronyme en anglais de *Ethylene Propylene Diene Monomer rubber).*

### Description brève des dessins

L'invention sera mieux comprise à la lecture de la description qui va suivre donnée uniquement à titre d'exemple non limitatif et faite en se référant aux figures annexées dans lesquelles les mêmes numéros de référence désignent partout des parties identiques et dans lesquelles :
- La figure 1 présente une vue en perspective d'un dispositif de fixation selon l'invention;
- La figure 2 présente une vue en perspective et en coupe d'un dispositif de fixation, la coupe étant réalisée au niveau de l'ouverture ;
- La figure 3 présente une vue en perspective d'un dispositif de fixation dont l'ouverture comprend deux segments linéiques séparant la paroi de maintien en quatre structures disjointes selon l'invention ;
- La figure 4 présente une vue en perspective d'un dispositif de fixation selon l'invention où un système de serrage à usage unique est mis en place dans le dispositif de retenue.

### Description détaillée de modes de réalisation

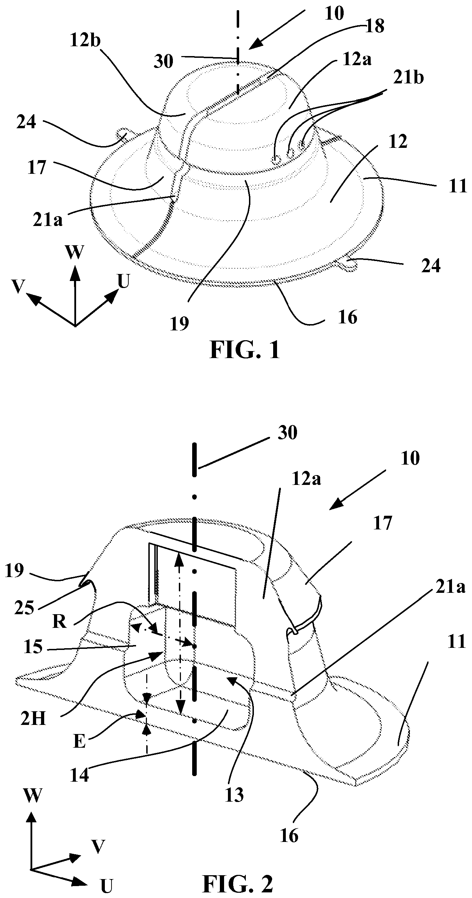

Sur la figure 1, on distingue un dispositif de fixation 10 d'un organe électronique de type TMS (acronyme anglais de Tyre Mounted System) dans un matériau comprenant un ou plusieurs composants compris dans le groupe comprenant caoutchouc naturel, butyle, éthylène propylène diène monomère. Ces mélanges permettent une performance de communication en radio fréquence suffisante pour l'organe électronique dans les gammes de fréquences UHF (acronyme de Ultra Hautes Fréquences) De plus ces mélanges ont une souplesse naturelle permettant la déformation élastique du dispositif de fixation.

Ici, le dispositif de fixation 10 présente un axe de rotation 30 définissant la direction verticale W dans le repère local du dispositif de fixation 10. Il est obtenu par moulage entre deux matrices principalement demi-coniques générant directement l'ouverture 18 au niveau de la paroi de maintien 12.

Ce dispositif de fixation 10 comprend une semelle 11 et une paroi de maintien 12 qui constituent ensembles le dispositif de fixation 10. La paroi de maintien 12 est constituée de deux structures disjointes 12a et 12b sur sa partie supérieure selon la direction W par rapport à la semelle 11. La séparation entre ces deux structures disjointes 12a et 12b est réalisée par l'ouverture 18. L'ouverture 18 peut ici s'élargir pour générer un espace suffisant pour introduire et extraire un organe électronique au sein du dispositif de fixation 10. Cet élargissement se fait autour d'une charnière naturelle constituée par certains orifices traversants 21a de section circulaire servant aussi d'extrémités de l'ouverture 18. La forme de ces orifices 21a permet aussi de limiter les concentrations de contraintes aux extrémités de l'ouverture 18.

La paroi de maintien 12 comprend ici plusieurs orifices 21a et 21b circulaires joignant la surface externe 17 de la paroi de maintien 12 à la surface interne de celle-ci. Ces orifices 21a et 21b mettent en communication le fluide contenu dans le volume de l'ensemble monté avec celui qui est contenu au sein du dispositif de fixation 10.

Enfin la paroi de maintien 12 du dispositif de fixation 10 est équipée d'une gorge 19 servant de dispositif de retenue pour un système de serrage à usage unique de type anneau rétractable qui n'est pas représenté. En effet, afin d'éviter toute extraction de l'organe électronique au travers de l'ouverture 18 de la paroi de maintien 12, le système de serrage a comme fonction essentielle de maintenir ensemble l'organe électronique et la paroi de maintien 12. Ce maintien limite d'une part des mouvements relatifs de l'organe électronique par rapport au dispositif de fixation et d'autre part des endommagements provoqués par ces chocs sur les surfaces internes de la semelle 11 et de la paroi de maintien 12. La gorge constitue naturellement une charnière permettant le pivotement relatif de la partie supérieure de la paroi de maintien par rapport à sa partie inférieure définie par rapport à la gorge. Cette charnière facilite les phases d'extraction et d'insertion de l'organe électronique au sein du dispositif de fixation 10.

Au niveau de la surface externe 16 de la semelle 11, le dispositif de fixation 10 est apte à être fixé à la paroi d'une enveloppe pneumatique par l'intermédiaire de moyens de fixation standards des produits élastomères de type colle MS-Polymère (acronyme de *Polyéther modifié silane),* MS PDMS (acronyme de *Polydiméthylsiloxane modifié Silane),* ruban adhésif doubles-faces ou gomme de liaison. Enfin la partie verticalement supérieure de la semelle par rapport à la surface externe de la semelle comprend ici en tant que marqueurs 24 deux ergots arrondis situés de façon diamétralement opposés s'étendant radialement extérieurement à la semelle 11. La direction correspondant à une parallèle par rapport à l'alignement des marqueurs 24 correspond à la direction transversale V du repère local. Enfin la direction longitudinale U du repère local est une direction perpendiculaire à l'alignement des marqueurs 24. Ces marqueurs 24 permettent un positionnement du dispositif de fixation 10 et par voie de conséquence de l'organe électronique au sein de l'enveloppe pneumatique. Ces marqueurs 24 sont indispensables si l'organe électronique permet, par exemple, une distinction des grandeurs physiques de l'ensemble monté selon les directions axiale A et circonférentielle S de l'ensemble monté en cas de pose du dispositif de fixation 10 au droit de la bande de roulement de l'enveloppe pneumatique.

La figure 2 présente la coupe d'un autre dispositif de fixation 10 dans un matériau similaire au dispositif de la figure 1 apte à se fixer à la paroi d'une enveloppe pneumatique à l'aide de moyens de fixation standards des produits élastomères. La coupe du dispositif de fixation 10 est faite selon la direction verticale W au niveau de l'ouverture dont les extrémités longitudinales se terminent dans des orifices traversant 21a de la paroi de maintien. Ce dispositif de fixation 10 présente sur cette figure d'une part une semelle 11 et d'autre part une structure disjointe 12a de la paroi de maintien. La semelle 11 sert d'interface de fixation avec la paroi de l'enveloppe pneumatique au travers de la surface externe 16. La semelle 11 présente une épaisseur E entre ses surfaces interne 14 et externe 16. Ainsi un découplage mécanique est réalisé entre l'organe électronique reposant sur la surface interne 14 de la semelle 11 et l'enveloppe pneumatique présente au niveau de la surface externe 16 de celle-ci. L'espace E est compris entre 2 et 4 millimètres, ici de 3 millimètres.

L'ouverture traverse la paroi de maintien 12 depuis la surface externe 17 vers la surface interne 15. La déformation élastique de la structure disjointe 12a de la paroi de maintien permet un élargissement de l'ouverture par laquelle l'organe électronique est introduit ou extrait du volume 13 du dispositif de fixation 10. Le volume 13 est délimité par la surface interne 14 de la semelle 11 et la surface interne 15 de la paroi de maintien. Ce volume 13 est apte à accueillir ici l'organe électronique dans une configuration avec ou sans jeu. Ainsi le volume 13 est inscrit aussi dans le cylindre droit autour d'un axe de rotation 30. On appelle par le terme « partie verticalement supérieure de la paroi de maintien », tout point matériel situé à une distance verticale H par rapport à la surface interne 14 de la semelle 11. L'autre partie de la paroi de maintien 12 sera intégrée dans la partie verticalement inférieure.

Plusieurs orifices traversent la paroi de maintien 12a depuis la surface externe 17 jusqu'à la surface interne 15. Ces orifices permettent de mettre en communication le fluide externe au dispositif de fixation 10 avec le fluide contenu dans le volume 13. Dans cette figure l'orifice 21a est situé à une distance verticale par rapport à la surface interne 14 de la semelle en dessous de la distance verticale H. Ces orifices servant de charnière à la paroi de maintien. Leur positionnement verticale facilite les étapes de manutention effectuées sur l'organe électronique. En revanche, tous les orifices ont une ouverture sur l'extérieur du dispositif de fixation 10 située à une distance radiale de l'axe de référence 30 supérieure à R.

De plus, la structure disjointe 12a de la paroi de maintien présente sur sa surface externe 17 une nervure radialement extérieure positionnée dans la partie verticalement supérieure qui sert de dispositif de retenue 19 d'un système de serrage à usage unique de la paroi de maintien. Ce dispositif de retenue 19 est positionné radialement par rapport à l'axe de référence 30 à une distance supérieure à R. Ce positionnement radial permet un dépliement de la structure disjointe 12a de la paroi de maintien suffisant pour extraire et insérer l'organe électronique du volume 13 interne au dispositif de fixation 10. Cette nervure est équipée ici d'une cavité 25 sur sa partie verticalement inférieure accueillant le système de serrage à usage unique non représentée sur cette figure. Cette cavité 25 joue le rôle d'une charnière entre la partie de la paroi de maintien 12 située verticalement supérieure à la nervure avec la partie de la paroi de maintien située verticalement inférieure à la nervure en l'absence d'un système de serrage à usage unique. Cette charnière facilite le dépliement des structures disjointes 12a de la paroi de maintien.

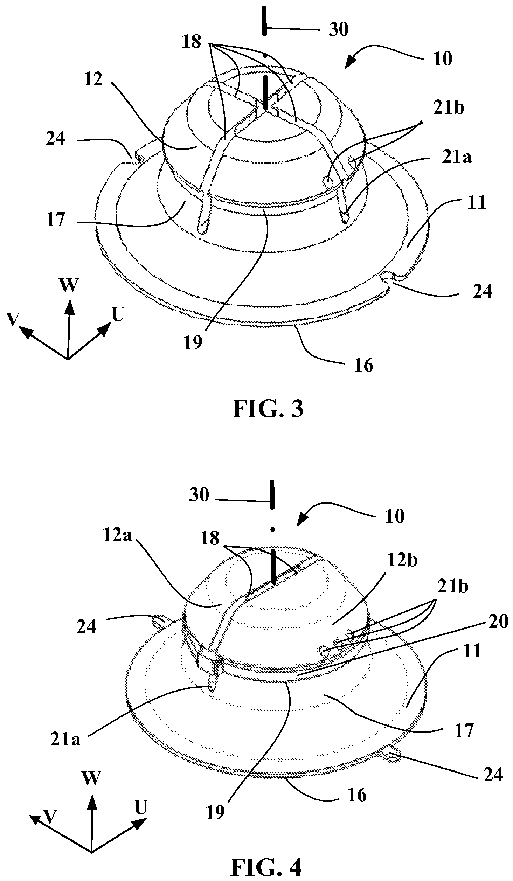

La figure 3 est une vue en perspective d'un autre dispositif de fixation 10. Ce dispositif présente un axe de rotation 30. La semelle 11 du dispositif de fixation 10 possède des marqueurs 24 diamétralement opposées sous la forme d'encoche permettant un positionnement angulaire du dispositif de fixation 10 par rapport à la paroi de l'enveloppe pneumatique. Dans d'autres formes de semelle 11 ne présentant pas d'axe de rotation comme une semelle en forme de losange, ces marqueurs 24 pourraient être, par exemple, des détails géométriques de la semelle 11 comme les angles du losange définissant la semelle .

On distingue bien dans la semelle 11 la surface externe 16 qui sert d'interface de liaison avec la paroi de l'enveloppe pneumatique. La propriété souple du matériau du dispositif de fixation 10 permet à la surface externe 16 de la semelle 11 d'épouser la surface de la paroi de l'enveloppe pneumatique afin de constituer une liaison efficace entre les deux éléments.

La paroi de maintien 12 solidairement liée à la semelle 11 présente une ouverture 18 constituée à partir des quatre fentes de la paroi de maintien 12. La largeur de l'ouverture 18 est ici de l'ordre de 3 millimètres. L'ouverture 18 traverse la paroi de maintien 12 depuis sa surface externe 17 jusqu'à sa surface interne.

La paroi de maintien 12 comprend aussi sur sa partie verticalement supérieure un dispositif de retenue 19 apte à accueillir au sein d'une cavité un système de serrage à usage unique. Ces détails ne sont pas représentés sur cette figure. Le dispositif de retenue 19 se présente comme une nervure discontinue de révolution autour de l'axe de rotation 30. Les discontinuités de la nervure sont situées au niveau des fentes de l'ouverture 18.

L'ouverture 18 permet le dépliement de la partie verticalement supérieure de la paroi de maintien 12 par l'intermédiaire de quatre structures disjointes de la paroi de maintien 12. Ces parties disjointes de la paroi de maintien 12 peuvent tout d'abord pivoter radialement au niveau de la cavité du dispositif de retenue 19. La cavité du dispositif de retenue 19, en l'absence d'un système de serrage à usage unique, autorise le pivotement de la partie verticalement supérieure de la structure disjointe de la paroi de maintien 12 par rapport à la partie verticalement inférieure ce cette même paroi. De plus, ces structures disjointes peuvent aussi pivoter circonférentiellement au niveau des extrémités de l'ouverture constituées par les orifices 21a. Ces deux rotations permettent de libérer un espace suffisant sur la partie verticalement supérieure de la paroi de maintien 12 afin de réaliser les étapes d'extraction ou d'insertion de l'organe électronique au sein du volume interne du dispositif de fixation 10. De plus la position verticale des orifices 21a servant d'extrémités de l'ouverture 18 permet d'une part de libérer l'espace pour la manutention de l'organe électronique. D'autre part, elles permettent aussi de limiter les déformations mécaniques de la semelle 11 permettant ainsi de garantir la fixation de celle-ci sur la paroi de l'enveloppe pneumatique lors des phases de manutention de l'organe électronique. Le changement de l'organe électronique dans le dispositif de fixation 10 a lieu sur l'enveloppe pneumatique.

La partie verticalement supérieure de la paroi de maintien 12 comprend aussi des orifices traversants 21b mettant en communication le fluide extérieur au dispositif de fixation 10 avec celui contenu dans le volume d'accueil de l'organe électronique.

La figure 4 est une vue en perspective d'un autre dispositif de fixation 10 selon l'invention présentant un axe de rotation 30. Le dispositif de fixation 10 comprend une semelle 11 et une paroi de maintien solidairement liées entre elles.

La semelle 11 présente sur sa périphérie deux marqueurs 24 sous la forme d'ergot positionnés selon la direction U permettant un positionnement précis du dispositif de fixation 10 par rapport à la paroi de l'enveloppe pneumatique. La fixation du dispositif de fixation 10 sur la paroi de l'enveloppe pneumatique est réalisée par l'intermédiaire de la surface extérieure 16 de la semelle 11 à l'aide de moyens de liaison standards des produits élastomères.

La paroi de maintien est constituée par deux structures disjointes 12a et 12b sur sa partie verticalement supérieure. L'ouverture 18 sert de séparation entre ses deux structures 12a et 12b. La largeur de l'ouverture 18 est ici de l'ordre de 2 millimètres. L'ouverture 18 se termine dans certains des orifices 21a de la paroi de maintien situés dans la partie verticalement inférieure. Le positionnement de ces orifices 21a servant de points d'arrêts à l'ouverture 18 permet d'obtenir un dépliement des structures disjointes 12a et 12b de la paroi de maintien pour réaliser les étapes de manutention de l'organe électronique dans le dispositif de fixation 10. En effet, ces orifices 21a servent de charnière aux structures disjointes 12a et 12b de la paroi de maintien. De plus ces structures disjointes 12a et 12b peuvent aussi pivoter radialement autour de la cavité du dispositif de retenue 19 de la paroi de maintien. En effet, le dispositif de retenue 19 est ici réalisée à l'aide d'une gorge de section rectangulaire servant aussi de cavité pour accueillir 50 % de la section rectangulaire du système de serrage à usage unique 20.

Enfin certains orifices traversants 21b situés sur la partie verticalement supérieure de la structure disjointe 12b de la paroi de maintien servent à mettre en communication le fluide entre l'extérieur du dispositif de fixation 10 et le volume d'accueil de l'organe électronique. L'ensemble des orifices traversants 21a et 21b a une extrémité extérieure localisée sur la surface externe 17 de la paroi de maintien.

Le système de serrage à usage unique 20 est ici représenté par un collier de type colson constitué d'un mélange en rilsan, polyamide ou nylon. Ce collier comprend un lien de section rectangulaire de longueur 3 millimètres et de largeur 1,5 millimètres. Ce collier présente aussi un dispositif de rétractabilité permettant d'une part de réduire la longueur du lien et d'autre part de former l'anneau. Le dispositif de rétractabilité est employé pour ajuster le diamètre au collier afin de rapprocher et de maintenir les lèvres de l'ouverture 18 situées respectivement sur les structures disjointes 12a et 12b de la paroi de maintien. L'extrémité libre du lien après formation et ajustement de l'anneau est coupée au raz du dispositif de rétractabilité afin de ne pas constituer une partie saillante pour les parois de l'enveloppe pneumatique.

L'ajustement de l'anneau conduit au rétrécissement de l'ouverture 18 entre les structures disjointes 12a et 12b de la paroi de maintien. De plus, la présence de l'anneau ajusté conduit à bloquer en position la charnière constituée par la cavité dans le dispositif de retenue 19 en occupant le volume de cette cavité à l'aide du système de serrage à usage unique 20. Ainsi le pivotement des structures disjointes 12a et 12b sur la partie verticalement supérieure au dispositif de retenue 19 s'en trouve limité n'autorisant plus ni l'extraction ni l'insertion de l'organe électronique du dispositif de fixation 10 au travers de l'ouverture 18. De ce fait l'inviolabilité du dispositif de fixation 10 est assurée. Seul l'enlèvement du système de serrage à usage unique 20, obtenu par une destruction au moins partielle de ce dernier, contenu dans le dispositif de retenue 19 permet la création d'un espace suffisant pour les manipulations de l'organe électronique. au niveau du dispositif de fixation 10. Dans le cas du collier de type colson, la section du lien par une lame de coupe au travers de la faille ou la destruction du dispositif de rétractabilité permet la libération de ce collier colson contenu dans la gorge de la paroi de maintien.

Bien entendu d'autres systèmes de serrage à usage unique peuvent aussi être employés tels que par exemple des anneaux en caoutchouc thermodurcissable, dans le groupe comprenant du caoutchouc naturel, du butyle, du nitrile et de l'éthylène propylène diène monomère, ou en caoutchouc thermosoudable dans le groupe comprenant polyuréthane et polyester.

## Revendications

1. Dispositif de fixation (10) à une paroi d'une enveloppe pneumatique d'un organe électronique comprenant :
- une semelle (11) apte à être fixée à la paroi de l'enveloppe pneumatique ;
- une paroi de maintien (12), liée à la semelle (11) et définissant avec ladite semelle (11) un volume (13) délimité par les surfaces intérieures (14, 15) de ladite semelle (11) et de ladite paroi de maintien (12) apte à accueillir l'organe électronique ; et
- un système de serrage (20) de la paroi de maintien (12) apte à bloquer toute extraction de l'organe électronique ;
- ladite paroi de maintien (12) présentant sur sa surface externe (16) au moins un dispositif de retenue (19) pour ledit système de serrage (20) de la paroi de maintien (12) ;
- ladite paroi de maintien (12), apte à se déformer élastiquement, comprenant une ouverture (18) permettant l'extraction et l'insertion dudit organe électronique ;
**caractérisé en ce que** ledit système de serrage (20) de la paroi de maintien (12) est à usage unique **et en ce que** ledit système de serrage (20), contenu dans le dispositif de retenue (19), est apte à être rompu sans détruire la paroi de maintien (12).

2. Dispositif de fixation (10) selon la revendication précédente, dans lequel, l'ouverture (18) définissant une lèvre sur chaque structure disjointe de la paroi de maintien (12), le système de serrage (20) est apte à rapprocher les lèvres de l'ouverture (18) au moins au niveau du dispositif de retenue (19).

3. Dispositif de fixation (10) selon l'une quelconque des revendications précédentes, dans lequel la paroi de maintien (12) comprend N orifices (21, 21a, 21b) traversants, N étant supérieur ou égal à 2.

4. Dispositif de fixation (10) selon la revendication 3, dans lequel les orifices traversants (21, 21a, 21b) ont une section à courbure continue.

5. Dispositif de fixation (10) selon la revendication 4, dans lequel tout point de la section d'un orifice traversant (21, 21a, 21b) a un rayon de courbure supérieur ou égal à 1 millimètre.

6. Dispositif de fixation (10) selon l'une quelconque des revendications précédentes, dans lequel le dispositif de retenue (19) du système de serrage de la paroi de maintien est compris dans le groupe comprenant nervure, gorge.

7. Dispositif de fixation (10) selon l'une quelconque des revendications précédentes, dans lequel le dispositif de retenue (19) du système de serrage de la paroi de maintien est partiellement continu.

8. Dispositif de fixation (10) selon l'une quelconque des revendications précédentes, dans lequel, le volume d'accueil de l'organe électronique positionné dans le dispositif de fixation (10) étant inscrit dans un cylindre droit autour d'un axe, appelé axe de référence (30), de hauteur 2H par rapport à la surface intérieure (14) de la semelle (11) et de diamètre 2R, le dispositif de retenue (19) du système de serrage de la paroi de maintien s'étend circonférentiellement par rapport à l'axe de référence (30) sur un secteur angulaire d'au moins 90 degrés.

9. Dispositif de fixation (10) selon l'une quelconque des revendications précédentes, dans lequel, le volume d'accueil de l'organe électronique positionné dans le dispositif de fixation (10) étant inscrit dans un cylindre droit autour d'un axe, appelé axe de référence (30), de hauteur 2H par rapport à la surface intérieure (14) de la semelle (11) et de diamètre 2R, le dispositif de retenue (19) du système de serrage de la paroi de maintien est situé à une distance radiale supérieure ou égale à R par rapport à l'axe de référence (30) et à une distance verticale supérieure ou égale à H par rapport à la surface intérieure (14) de la semelle.

10. Dispositif de fixation (10) selon l'une quelconque des revendications précédentes, dans lequel le dispositif de retenue (19) du système de serrage de la paroi de maintien comprend une cavité (25) apte à recevoir au moins une partie du système de serrage (20) de la paroi de maintien.

11. Dispositif de fixation (10) selon la revendications 10, dans lequel la cavité (25) du dispositif de retenue (19) du système de serrage de la paroi de maintien a une section accueillant au moins 40% de la section du système de serrage (20).

12. Dispositif de fixation (10) selon l'une des revendications précédentes, dans lequel le système de serrage (20) la paroi de maintien comprend un anneau rétractable.

13. Dispositif de fixation (10) selon l'une des revendications précédentes, dans lequel la semelle (11) comprend au moins un marqueur (24) situé sur la partie verticalement supérieure de la dite semelle (11).

14. Dispositif de fixation (10) selon l'une des revendications précédentes, dans lequel le dispositif de fixation (10) est constitué avec un matériau élastomère.

## Patentansprüche

1. Vorrichtung (10) zur Befestigung eines elektronischen Elements an einer Wand eines Reifenmantels, die enthält:
- einen Sockel (11), der an der Wand des Reifenmantels befestigt werden kann;
- eine Haltewand (12), die mit dem Sockel (11) verbunden ist und mit dem Sockel (11) ein von den Innenflächen (14, 15) des Sockels (11) und der Haltewand (12) begrenztes Volumen (13) definiert, das das elektronische Element aufnehmen kann; und
- ein Spannsystem (20) der Haltewand (12), das jede Entnahme des elektronischen Elements blockieren kann;
- wobei die Haltewand (12) an ihrer Außenfläche (16) mindestens eine Rückhaltevorrichtung (19) für das Spannsystem (20) der Haltewand (12) aufweist;
- wobei die Haltewand (12), die sich elastisch verformen kann, eine Öffnungsfläche (18) aufweist, die die Entnahme und das Einführen des elektronischen Elements erlaubt;
**dadurch gekennzeichnet, dass** das Spannsystem (20) der Haltewand (12) ein Einmalsystem ist, und dass das in der Rückhaltevorrichtung (19) enthaltene Spannsystem (20) zerbrochen werden kann, ohne die Haltewand (12) zu zerstören.

2. Befestigungsvorrichtung (10) nach dem vorhergehenden Anspruch, wobei, da die Öffnungsfläche (18) auf jeder getrennten Struktur der Haltewand (12) eine Lippe definiert, das Spannsystem (20) die Lippen der Öffnungsfläche (18) zumindest im Bereich der Rückhaltevorrichtung (19) annähern kann.

3. Befestigungsvorrichtung (10) nach einem der vorhergehenden Ansprüche, wobei die Haltewand (12) N Durchgangsöffnungen (21, 21a, 21b) enthält, wobei N größer als oder gleich 2 ist.

4. Befestigungsvorrichtung (10) nach Anspruch 3, wobei die Durchgangsöffnungen (21, 21a, 21b) einen Querschnitt mit durchgehender Krümmung haben.

5. Befestigungsvorrichtung (10) nach Anspruch 4, wobei jeder Punkt des Querschnitts einer Durchgangsöffnung (21, 21a, 21b) einen Krümmungsradius größer als oder gleich 1 Millimeter hat.

6. Befestigungsvorrichtung (10) nach einem der vorhergehenden Ansprüche, wobei die Rückhaltevorrichtung (19) des Spannsystems der Haltewand zu der Gruppe gehört, die Rippe, Rille enthält.

7. Befestigungsvorrichtung (10) nach einem der vorhergehenden Ansprüche, wobei die Rückhaltevorrichtung (19) des Spannsystems der Haltewand teilweise durchgehend ist.

8. Befestigungsvorrichtung (10) nach einem der vorhergehenden Ansprüche, wobei, da das Aufnahmevolumen des in der Befestigungsvorrichtung (10) positionierten elektronischen Elements in einem geraden Zylinder um eine Bezugsachse genannte Achse (30) herum mit einer Höhe 2H bezüglich der Innenfläche (14) des Sockels (11) und einem Durchmesser 2R eingeschrieben ist, die Rückhaltevorrichtung (19) des Spannsystems der Haltewand sich in Umfangsrichtung bezüglich der Bezugsachse (30) über einen Winkelsektor von mindestens 90 Grad erstreckt.

9. Befestigungsvorrichtung (10) nach einem der vorhergehenden Ansprüche, wobei, da das Aufnahmevolumen des in der Befestigungsvorrichtung (10) positionierten elektronischen Elements in einem geraden Zylinder um eine Bezugsachse genannt Bezugsachse genannten Achse (30) herum mit einer Höhe 2H bezüglich der Innenfläche (14) des Sockels (11) und einem Durchmesser 2R eingeschrieben ist, die Rückhaltevorrichtung (19) des Spannsystems der Haltewand sich in einem radialen Abstand größer als oder gleich R bezüglich der Bezugsachse (30) und in einem senkrechten Abstand größer als oder gleich H bezüglich der Innenfläche (14) des Sockels befindet.

10. Befestigungsvorrichtung (10) nach einem der vorhergehenden Ansprüche, wobei die Rückhaltevorrichtung (19) des Spannsystems der Haltewand eine Aushöhlung (25) enthält, die mindestens einen Teil des Spannsystems (20) der Haltewand aufnehmen kann.

11. Befestigungsvorrichtung (10) nach Anspruch 10, wobei die Aushöhlung (25) der Rückhaltevorrichtung (19) des Spannsystems der Haltewand einen Querschnitt hat, der mindestens 40% des Querschnitts des Spannsystems (20) aufnimmt.

12. Befestigungsvorrichtung (10) nach einem der vorhergehenden Ansprüche, wobei das Spannsystem (20) der Haltewand einen schrumpfbaren Ring enthält.

13. Befestigungsvorrichtung (10) nach einem der vorhergehenden Ansprüche, wobei der Sockel (11) mindestens eine Markierung (24) enthält, die sich auf dem senkrecht oberen Teil des Sockels (11) befindet.

14. Befestigungsvorrichtung (10) nach einem der vorhergehenden Ansprüche, wobei die Befestigungsvorrichtung (10) aus einem Elastomermaterial besteht.

## Claims

1. Device (10) for securing an electronic member to a wall of a tyre casing, comprising:
- a base (11) able to be secured to the wall of the tyre casing;
- a retaining wall (12), connected to the base (11) and with the said base (11) defining a volume (13) delimited by the interior surfaces (14, 15) of the said base (11) and of the said retaining wall (12) which is able to accommodate the electronic member; and
- a clamping system (20) for clamping the retaining wall (12), able to prevent any extraction of the electronic member;
- the said retaining wall (12) on its external surface (16) has at least one retaining device (19) for the said clamping system (20) for clamping the retaining wall (12);
- the said retaining wall (12), which is able to deform elastically, comprises an opening (18) that allows the said electronic member to be extracted and inserted;
**characterized in that** the said clamping system (20) for clamping the retaining wall (12) is a single-use system **and in that** the said clamping system (20), contained in the retaining device (19), is able to be broken without destroying the retaining wall (12).

2. Securing device (10) according to the preceding claim, in which, with the opening (18) defining a lip on each disjointed structure of the retaining wall (12), the clamping system (20) is able to bring together the lips of the opening (18) at least at the retaining device (19).

3. Securing device (10) according to either one of the preceding claims, in which the retaining wall (12) comprises N through-orifices (21, 21a, 21b), N being greater than or equal to 2.

4. Securing device (10) according to Claim 3, in which the through-orifices (21, 21a, 21b) have a cross section with continuous curvature.

5. Securing device (10) according to Claim 4, in which any point on the cross section of a through-orifice (21, 21a, 21b) has a radius of curvature greater than or equal to 1 millimetre.

6. Securing device (10) according to any one of the preceding claims, in which the retaining device (19) for the clamping system that clamps the retaining wall is comprised in the group including grooves and channels.

7. Securing device (10) according to any one of the preceding claims, in which the retaining device (19) for the clamping system that clamps the retaining wall is partially continuous.

8. Securing device (10) according to any one of the preceding claims, in which, with the volume housing the electronic member positioned in the securing device (10) being inscribed inside a right cylinder that is upright about an axis, referred to as the reference axis (30), of height 2H with respect to the interior surface (14) of the base (11), and of diameter 2R, the retaining device (19) for the clamping system that clamps the retaining wall extends circumferentially with respect to the reference axis (30) over an angular sector of at least 90 degrees.

9. Securing device (10) according to any one of the preceding claims, in which, with the volume housing the electronic member positioned in the securing device (10) being inscribed inside a right cylinder that is upright about an axis, referred to as the reference axis (30), of height 2H with respect to the interior surface (14) of the base (11), and of diameter 2R, the retaining device (19) for the clamping system that clamps the retaining wall is situated at a radial distance greater than or equal to R away from the reference axis (30) and at a vertical distance greater than or equal to H away from the interior surface (14) of the base.

10. Securing device (10) according to any one of the preceding claims, in which the retaining device (19) for the clamping system that clamps the retaining wall comprises a cavity (25) able to house at least part of the clamping system (20) that clamps the retaining wall.

11. Securing device (10) according to Claim 10, in which the cavity (25) of the retaining device (19) for the clamping system that clamps the retaining wall has a cross section that accommodates at least 40% of the cross section of the clamping system (20).

12. Securing device (10) according to one of the preceding claims, in which the clamping system (20) that clamps the retaining wall comprises a tightenable ring.

13. Securing device (10) according to one of the preceding claims, in which the base (11) comprises at least one marker (24) situated on the vertically upper part of the said base (11).

14. Securing device (10) according to one of the preceding claims, in which the securing device (10) consists of an elastomer material.
